(19) Europäisches Patentamt
European Patent Office
Office européen des brevets

(11) Publication number: 0 149 028 A2

(12) EUROPEAN PATENT APPLICATION

(21) Application number: 84112832.5

(51) Int. Cl.⁴: C 04 B 26/10

(22) Date of filing: 24.10.84

(30) Priority: 24.10.83 US 544763
23.08.84 US 643571

(43) Date of publication of application:
24.07.85 Bulletin 85/30

(84) Designated Contracting States:
BE DE FR GB IT NL

(71) Applicant: THE DOW CHEMICAL COMPANY
Dow Center 2030 Abbott Road Post Office Box 1967
Midland Michigan 48640(US)

(72) Inventor: Hefner, Robert E., Jr.
109 Wedgewood
Lake Jackson Texas 77566(US)

(74) Representative: Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel Möhlstrasse 22
D-8000 München 80(DE)

# (54) Polyesteramide concrete.

(57) Polymer concrete compositions are made from norbornyl modified unsaturated polyesteramide compositions. The curable concrete composition contains 2 to 20 percent by weight of the polyesteramide composition and 98 to 80 percent by weight of an aggregate such as sand, gravel, silica flour, etc. The polyesteramide composition contains norbornyl modified polyesteramide, ethylenically unsaturated monomers, such as styrene with or without a vinyl reactive additive. The polyesteramide can be further modified to contain a copolymerized polyether polyol having a functionality of three or more, a copolymerized poly(2-alkyl-2-oxazoline) or a copolymerized carboxylated rubber. The vinyl reactive additive can be a vinyl ester resin or a vinyl terminated urethane oligomer. When cured, the curable concrete composition gives a polymer concrete with better tensile and compressive strength with the advantage that the composition cures under water and in the presence of moisture.

EP 0 149 028 A2

Croydon Printing Company Ltd

POLYESTERAMIDE CONCRETE

This invention relates to polyesteramide concrete wherein the matrix is a norbornyl modified unsaturated polyesteramide and the aggregate is sand or/and gravel and other additives.

Polymer concretes are known using various polymers or resins with various aggregates. Examples of the known cureable resins are furan, unsaturated polyester, epoxy, and vinyl ester resins.

Of the known systems, polyester concretes appear to be the most economical but they have deficiencies such as excessive shrinkage that can be improved.

Dicyclopentadiene modified unsaturated polyester resin compositions are known from U.S. 4,228,251 to be useful to make resin concrete.

Indanyl modified unsaturated polyester and polyesteramide resins are disclosed to be useful to make resin concrete in U.S. Application Serial Number 545,024, "HYDROCARBON-MODIFIED UNSATURATED POLYESTER OR

POLYESTERAMIDE RESINS" by R. E. Hefner, Jr. filed on October 24, 1983.

The invention is broadly a cured and curable polymer concrete composition comprising from 2 to 20 percent by weight of a norbornyl modified unsaturated polyesteramide composition with from 98 to 80 percent by weight of an aggregate.

The polyesteramide composition comprises a blend of from 20 to 80 percent by weight of a norbornyl modified unsaturated polyesteramide, from 20 to 80 percent by weight of one or more ethylenically unsaturated monomers and from 0 to 60 percent by weight of a vinyl reactive additive.

The norbornyl modified unsaturated polyesteramide can be further modified by copolymerizing polyols, poly (2-alkyl-2-oxazolines) and carboxylated rubber therein.

The invention resides in polyesteramide-aggregate compositions which when cured with known catalyst systems result in a polymer concrete with better tensile and compressive strengths with the added advantage that the composition can bond to various substrates such as concrete, metal, or asphalt under water or in the presence of moisture.

The polyesteramides used in this invention have a esteramide chain and have at least one terminal norbornyl radical. The ester amide chain is composed of the polymerizate of a polyamine, a polyol and an α,β-unsaturated polycarboxylic acid.

The polyamine is from the class of those having the formula:

$$\begin{matrix} HN-R_3-NH \\ \quad | \qquad\quad | \\ R_1 \qquad R_2 \end{matrix}$$

wherein $R_1$ and $R_2$ are selected from hydrogen, aliphatic, cycloaliphatic or aromatic radicals, or $R_1$ and $R_2$ when taken together with the remainder of the molecule form an aliphatic ring; wherein $R_3$ is a divalent organic radical selected from alkylene, ether-linked alkylene, ether-linked arylene, alkylene amino-linked alkylene, alkylene amino-linked cycloalkylene, cycloalkylene, polycycloalkylene, arylene, alkylarylene, bis(alkyl)-cycloalkylene or bis(alkyl) polycycloalkylene.

Typical diamines that are useful herein are ethylene diamine, propylene diamine, hexane-1,6-diamine, piperazine, 4,4'-methylenebis(cyclohexylamine), 2,2'-bis-(4-aminocyclohexyl)propane, 4,4'-diaminodiphenyl ether, bis(aminomethyl)norbornene, toluene diamine, bis(aminomethyl) dicyclopentadiene and homopiperazine. Typical polyamines are aminoethylpiperazine and diethylenetriamine.

The polyol is from the class of those having the formula:

$$HO-R_4-OH$$

wherein $R_4$ is a divalent organic radical selected from alkylene, ether-linked alkylene, ether-linked arylene, cycloalkylene, polycycloalkylene, bis(alkyl)cycloalkylene, bis(alkyl)polycycloalkylene, and arylene. Mixtures of two or more of such polyols can be used.

Representative of the useful polyols are the diols such as ethylene glycol, propylene glycol,

diethylene glycol, dipropylene glycol, dicyclopentadiene dimethanol, bis(hydroxymethyl)norbornane, methyl cyclohexanedimethanol, and bis(hydroxypropyl)bisphenol A.

In addition to the above polyols, polyether polyols having a functionality of three or more can be used so as to provide 1-50 percent by weight of the polyether polyols.

Examples of useful polyether polyols are the ethoxylated and/or propoxylated tri, tetra, penta or hexa hydroxy compounds such as glycerin, pentaerythritol, trimethylolpropane, and sorbitol. If desired, mixtures of the above multifunctional polyols can be used.

The ratio of polyamine to polyol can be varied within wide limits. That ratio is significantly related to the solubility of the modified polyesteramide in reactive diluents, such as styrene, which are commonly employed with polyesteramides for many applications. As a general rule, the amount of polyamine should not exceed about 1/3 the combined weight of the polyol and polyamine. The structure and size of the polyamine molecule will determine to a great extent the maximum amount of polyamine that can be used.

The $\alpha,\beta$-unsaturated polycarboxylic acid is preferably maleic acid, fumaric acid, maleic anhydride or mixtures of those compounds. Such acids are readily available, have good reactivity with the polyol and polyamine, and result in products of good properties.

Part of the $\alpha,\beta$-unsaturated acid may be replaced with a saturated or aromatic polycarboxylic

acid to vary the cross-linking potential and physical properties of the modified polyesteramide. Such acids include the aliphatic acids such as adipic acid and the aromatic acids such as isophthalic acid. Replacement of part of the $\alpha,\beta$-unsaturated acid with such acids is commonplace in the polyester art. Suitable selection of acid and amount to achieve a desired purpose will be known to the skilled worker and can be optimized with simple preliminary experiments.

The total amount of acid varies as a function of the total polyol, polyamine and norbornyl functional ingredients used.

The terminal group used to modify the polyesteramide is a norbornyl radical. Dicyclopentadiene is a most preferred norbornyl functional material to be employed in terminating one or both ends of the chain. Polycyclopentadiene (i.e., DCPD oligomers) or dicyclopentadiene monoalcohol are also preferred species. Norbornene itself can also be used.

DCPD is sold commercially as a product of about 97 or greater percent purity. It is also sold as a $C_{10}$ hydrocarbon concentrate prepared by dimerizing a crude $C_5$ stream from the cracking of hydrocarbons as taught in U. S. Patent 3,557,239. A preferred DCPD source is one that is low in peroxides and hydroperoxides and in light hydrocarbons and residual cyclopentadiene.

The concentrates have as the main reactive components from 70 to 90 percent by weight of ducyclopentadiene, and from 5 to 30 percent by weight of the mixed Diels-Alder dimers of diolefins such as butadiene,

cis- and trans-piperylene, isoprene, cyclopentadiene and methyl cyclopentadiene. The remainder of these concentrates generally comprise residual $C_5$ hydrocarbons and oligomers of the above diolefins.

Examples of some of the dimers which have been identified in these concentrates are the Diels-Alder adducts of two moles of isoprene (isoprene dimers), the adduct of cyclopentadiene and isoprene, the adduct of cyclopentadiene and piperylene, and the like.

Either the $C_{10}$ concentrate or the relatively pure DCPD may be employed in preparing the modified unsaturated polyesteramides.

As is common in the unsaturated polyester art, the modified polyesteramides of this invention may be blended with a monomer that is compatible therewith. Typical of the vinyl monomers are the alkenyl aromatics, such as styrene, divinylbenzene or vinyltoluene. Acrylic monomers, although less preferred, may also be used separately or in conjunction with the vinyl monomer. Typical of the acrylic monomers are methylmethacrylate or dicyclopentadiene acrylate. Other useful vinyl monomers will be known to the skilled worker. The vinyl monomer, frequently called a reactive diluent, may be employed within a wide range of concentration of from 20 to 80 percent of diluent to 80 to 20 percent of the resin. The optimum amount will depend in large measure on the polyesteramide, the diluent and the properties desired in the uncured and the cured states. Reactive diluents are employed principally to adjust the viscosity of a resin blend to permit its facile use in a given fabrication procedure.

The polyesteramides are curable by known catalyst systems. Peroxides, such as methyl ethyl ketone peroxides, can be used with or without known promoters, such as cobalt octoate or cobalt naphthenate, that function with such peroxides. Acyl peroxides, such as benzoyl peroxides can be used with or without promoters such as tertiary amines, including typically dimethyl aniline and N,N-dimethyl-p-toluidine. The concentrations of catalyst and promoter are adjusted within known limits of from 0.1 to 3.0 weight percent depending on the rate of cure desired, the magnitude of the generated exotherm and for other known purposes. Known gelation retarding agents, such as p-benzoquinone, can be employed in the curing system.

The foregoing norbornyl modified unsaturated polyesteramides are described in U.S. Patent No. 4,410,686.

The above polyesteramides can be further modified by copolymerizing into the polyesteramide chain poly(2-alkyl-2-oxazolines). These polyoxazolines are used in amounts of from 0.01 to 2.0 percent by weight based on the polyesteramide and preferably from 0.10 to 1.0 percent by weight. The polyoxazoline modified polyesteramides are disclosed and claimed in U.S. Application Serial Number 452,583 filed December 23, 1982.

Still further, the above polyesteramides can be modified by incorporating from 0.5 to 20.0 percent by weight and preferably from 3.0 to 12.0 percent by weight of a carboxylated rubber into the polyesteramide chain. The preparation of these rubber modified polyesteramides is set forth hereinafter.

The modified polyesteramides can be blended or mixed with from 0 to 60 percent by weight of a vinyl reactive additive such as a vinyl ester resin or mixtures thereof or vinyl terminated urethane oligomers.

When the vinyl reactive additive is a vinyl ester resin or a mixture thereof, it can be used in an amount of from 1 to 60 percent by weight and preferably from 5 to 40 percent by weight.

Blends of polyesteramides and vinyl ester resins are disclosed in U.S. Application Serial Number 411,178 filed August 25, 1982.

When the vinyl reactive additive is a vinyl terminated urethane oligomer, it can be used in an amount of from 1 to 15 percent by weight and preferably from 3 to 10 percent by weight.

The vinyl terminated urethane oligomers and polyesteramides containing them are disclosed in U.S. Application Serial Number 502,869 filed June 9, 1983.

Polymer concrete is a composition made by blending of a curable resin component and an aggregate component. The polymer concrete composition of the present invention is prepared by blending from 2 to 20 percent by weight of a polyesteramide composition with from 98 to 80 percent by weight of an aggregate component. The aggregate component is typically sand, gravel, crushed stone or rock, silica flour, fly ash, and the like, or mixtures thereof. Up to about 50 percent by weight of metal fines, glass fibers, synthetic fibers, glass reinforcing mats, metal turnings, metal fibers,

hydrated alumina, ceramic beads and the like, or mixtures thereof may be present in the aggregate composition. The exact components used in the aggregate composition are generally dictated by the physical properties required of the cured polymer concrete composition. Thus, optimal aggregate particle size distribution and physical configuration can be determined by simple preliminary experiments.

The polymer concrete of the present invention is especially suited for use in repair of spalled, cracked or otherwise damaged concrete highways and bridges because of its low shrinkage upon curing, high mechanical strength, excellent adhesion to concrete and aggregate and ability to adhere to wet concrete surfaces.

The polymer concrete of the present invention is also well suited for use as an electrical insulating material, for example in the preparation of tough, highly moisture and impact resistant electrical powerline insulators.

The unsaturated polyesteramide-aggregate blends or mixtures are curable by known catalyst systems. Peroxides, such as methyl ethyl ketone peroxides, can be used with or without known promoters, such as cobalt octoate or cobalt naphthenate, that function with such peroxides. Acyl peroxides, such as benzoyl peroxides can be used with or without promoters such as tertiary amines, including typically dimethyl aniline and N,N-dimethyl-p-toluidine. The concentrations of catalyst and promoter are adjusted within known limits of from 0.1 to 3.0 weight percent depending on the rate of cure desired, the magnitude of the generated exotherm

and for other known purposes. Known gelation retarding agents, such as p-benzoquinone, can be employed in the curing system.

The following examples are given to illustrate the invention. All parts and percentages are by weight unless otherwise specified.

Preparation 1: DICYCLOPENTADIENE MODIFIED UNSATURATED POLYESTERAMIDE (Resin A)

A dicyclopentadiene modified unsaturated polyesteramide resin was prepared in a 10 gallon (37.85 liters), 316 stainless steel reactor. The reactor was equipped with mechanical stirring, flowmeter controlled inlet lines and associated valving for nitrogen, water, dicyclopentadiene, propylene glycol--piperazine solution, and styrene. The respective liquid reactants were metered into the reactor from individual stainless steel bombs under positive nitrogen pressure with calibrated pumps. A digital scale was used to monitor the weight loss from each bomb during pumping. Heating and cooling was provided to the reactor jacket via a recirculating pump for the heat transfer fluid. Trombone cooling coils with a water curtain system provided for rapid cooling when activated. The reactor overhead section was fitted with a manway for charging solid maleic anhydride briquettes or hydroquinone and a steam-jacketed condensor. The overhead section of the steam condensor was chilled via a refrigeration unit. Liquid from the steam condensor was collected in a receiver fitted with a drain valve. Product was recovered from the reactor through a gate valve into a 10 micron filter assembly and to a valved drumming outlet.

The following reaction stoichiometry was used:

| | |
|---|---|
| maleic anhydride | 7940 grams |
| water | 1600 grams |
| dicyclopentadiene (96%) | 9630 grams |
| 11.17% wt. piperazine in propylene glycol solution | 3750 grams |
| hydroquinone | 2.75 grams |
| styrene | 12,803 grams |

The following reaction sequence was used:

| Reaction Step | Cumulative Reaction Time |
|---|---|
| Maleic anhydride charged | 0 minutes |
| 1/2 water charged to stirred 90°C maleic anhydride solution | 40 minutes |
| Dicyclopentadiene addition started | 42 minutes |
| 1/2 water charged | 57 minutes |
| Dicyclopentadiene addition completed | 75 minutes |
| Hydrolysis reaction completed [% dicyclopentadiene/acid number] | 2.0 hrs., 10 min. [1.9%/259] |
| Piperazine-propylene glycol solution added and temperature controller set at 160°C | 2.0 hrs., 25 min. |
| Reaction at 160°C completed [acid number] | 4.0 hrs., 25 min. [136] |
| Temperature set at 205°C | 4.0 hrs., 38 min. |
| Nitrogen sparge set at 1 GPH | 14.0 hrs., 40 min. |

| Reaction Step | Cumulative Reaction Time |
| --- | --- |
| Reaction at 205°C completed and cooling started [acid number] | 17.0 hrs., 10 min. [31] |
| Hydroquinone added | 18.0 hours |
| Styrene added | 19.0 hrs., 50 min. |
| Styrenated resin drummed[1] | 20.0 hrs., 40 min. |

[1] Contained 40 percent by weight styrene based on recovered product weight.

Preparation 2: DICYCLOPENTADIENE MODIFIED UNSATURATED POLYESTERAMIDE PREPARED USING A DICYCLOPENTADIENE CONCENTRATE (Resin B)

Maleic anhydride (686.42 grams, 7.00 moles) was added to a reactor and heated to a clear, stirred solution maintained at 100°C under a nitrogen atmosphere. Water (127.94 grams, 7.10 moles) was added inducing a maximum exotherm of 134°C two minutes later. The reactor was air-cooled to 120°C and fifteen minutes after the initial water addition 295.2 grams of dicyclopentadiene concentrate (2.10 moles) was added. The dicyclopentadiene concentrate contained 83 percent by weight (pbw) dicyclopentadiene, 10.18 pbw isoprene--cyclopentadiene codimer, and 0.15 pbw methylcyclopentadiene-cyclopentadiene codimer. A maximum exotherm of 129°C resulted one minute later and after an additional five minutes, air cooling reduced the reaction temperature to 120°C. Fifteen minutes after the initial dicyclopentadiene concentrate addition, a second aliquot of dicyclopentadiene concentrate (295.21 grams, 2.10 moles) was added. A maximum exotherm of 129°C resulted five minutes later and after an additional four minutes, air cooling reduced the reaction temperature to 120°C. A final aliquot of dicyclopentadiene concentrate (295.21

grams, 2.10 moles) was added fifteen minutes after the second dicyclopentadiene addition and the 120°C reaction temperature was re-achieved three minutes later. Thirty minutes later, propylene glycol (287.66 grams, 3.78 moles) and piperazine (36.18 grams, 0.420 mole) were added and nitrogen sparging was increased to 0.5 liter per minute, the steam condenser was started, and the temperature controller was set at 160°C. This temperature was achieved thirty-three minutes later. After two hours, the temperature controller was set at 205°C and this temperature was achieved forty-three minutes later. After fourteen hours, 173 milliliters of water layer and 59 milliliters of organic material were recovered into the Dean Stark trap. The reactor was cooled to 165°C and 100 ppm of hydroquinone was added. The modified polyesteramide was recovered as a transparent, light-yellow colored solid with a final acid number of 23.7.

Preparation 3: DICYCLOPENTADIENE MODIFIED UNSATURATED POLYESTERAMIDE WITH 2.9% BY WEIGHT OF FLEXIBILIZING GLYCOL ETHER COMPONENT (Resin C)

A dicyclopentadiene modified unsaturated polyesteramide resin was prepared in a 10 gallon (37.85 liter), 316 stainless steel reactor. The reactor was equipped with mechanical stirring, flowmeter controlled inlet lines and associated valving for nitrogen, water, dicyclopentadiene, propylene glycol-polypropoxylate of glycerin (1 mole) with propylene oxide (9 moles)-piperazine solution, and styrene. The respective liquid reactants were metered into the reactor from individual stainless steel bombs under positive nitrogen pressure with calibrated pumps. A digital scale was used to monitor the weight loss from each bomb during pumping. Heating

and cooling was provided to the reactor jacket via a recirculating pump for the heat transfer fluid. Trombone cooling coils with a water curtain system provided for rapid cooling when activated. The reactor overhead section was fitted with a manway for charging solid maleic anhydride briquettes or hydroquinone and a steam-jacketed condensor. The overhead section of the steam condensor was chilled via a refrigeration unit. Liquid from the steam condensor collected in a receiver fitted with a drain valve. Product was recovered from the reactor through a gate valve into a 10 micron filter assembly which led to a valved drumming outlet.

The following reaction stoichiometry was used:

| | |
|---|---|
| maleic anhydride | 7940 grams |
| water | 1600 grams |
| dicyclopentadiene (96%) | 9630 grams |
| 15.65% wt. polypropoxylate of glycerin with propylene oxide, and 9.75% wt. piperazine in propylene glycol solution | 4294 grams |
| hydroquinone | 2.75 grams |
| styrene | 12,803 grams |

The following reaction sequence was used:

| Reaction Step | Cumulative Reaction Time |
|---|---|
| Maleic anhydride charged | 0 minutes |
| 1/2 water charged to stirred 90°C maleic anhydride solution | 40 minutes |

| | |
|---|---|
| Dicyclopentadiene addition started | 42 minutes |
| 1/2 water charged | 57 minutes |
| Dicyclopentadiene addition completed | 70 minutes |
| Hydrolysis reaction completed [% dicyclopentadiene/acid number] | 2.0 hrs., 15 min. [0.8%/259] |
| Polypropoxylate of glycerin with propylene oxide - piperazine-propylene glycol solution added and temperature controller set at 160°C | 2.0 hr., 55 min. |
| Reaction at 160°C completed [acid number] | 5.0 hrs., 15 min. [120] |
| Temperature set at 205°C | 5.0 hrs., 25 min. |
| Nitrogen sparge set at 1 GPH | 15.0 hrs., 25 min. |
| Reaction at 205°C completed and cooling started [acid number] | 19.0 hrs., 55 min. [24.1] |
| Hydroquinone added | 20.0 hr., 10 min |
| Styrene added | 20.0 hrs., 52 min. |
| Styrenated resin drummed[1] | 21.0 hrs., 15 min. |

[1]Contained 38 percent by weight styrene based on recovered product weight.

Preparation 4: DICYCLOPENTADIENE MODIFIED UNSATURATED POLYESTERAMIDE WITH 11.9% BY WEIGHT OF FLEXIBILIZING GLYCOL ETHER COMPONENT (Resin D)

Maleic anhydride (6.00 moles, 588.36 grams) was added to a reactor with stirring and heated to 100°C under a nitrogen atmosphere. Water (6.084 moles, 109.63 grams) was added, inducing a maximum exotherm of 130°C two minutes later. Fifteen minutes after the water addition, the reactor was air cooled to 120°C and dicyclopentadiene (1.80 moles, 237.98 grams) was added.

A maximum exotherm of 124°C resulted two minutes later. Air cooling reduced the reactor temperature to 120°C. A second aliquot of dicyclopentadiene (1.80 moles, 237.98 grams) was added fifteen minutes after the initial dicyclopentadiene addition. A maximum exotherm of 127°C resulted four minutes later. Air cooling reduced the reactor temperature to 120°C. Fifteen minutes later, a final aliquot of dicyclopentadiene (1.80 moles, 237.98 grams) was added and the 120°C reaction temperature was re-achieved three minutes later. After thirty minutes, propylene glycol (2.79 moles, 212.32 grams), 241.9 equivalent weight polypropoxylate of glycerin (1 mole) with propylene oxide (9 moles) (0.30 moles, 224.34 grams), and piperazine (0.36 moles, 31.01 grams) were added to the reactor and the steam condenser was started, nitrogen sparging was increased to 0.75 liter per minute, and the temperature controller was set at 160°C. The 160°C, the temperature was reached 25 minutes later. After 2.0 hours at 160°C, the temperature controller was set at 205°C and this temperature was achieved 38 minutes later. After 14.0 hours, a total of 138 milliliters of water layer and 26 milliliters of organic material were collected into the Dean Stark trap. The reactor was cooled to 165°C and 100 ppm of hydroquinone was added. The modified polyesteramide was recovered as a transparent, light yellow-colored solid with a final acid number of 16.7.

Preparation 5: DICYCLOPENTADIENE MODIFIED UNSATURATED POLYESTERAMIDE WITH 25.1% BY WEIGHT OF FLEXIBILIZING GLYCOL ETHER COMPONENT (Resin E)

Maleic anhydride (5.00 moles, 490.30 grams) was added to a reactor and heated to a 100°C stirred solution maintained under a nitrogen atmosphere. Water (5.07 moles, 91.39 grams) was added, inducing a maximum exotherm of 129°C two minutes later. Fifteen minutes after the water addition, the reactor was air cooled to 120°C and dicyclopentadiene (1.50 moles, 198.32 grams) was added. A maximum exotherm of 124°C resulted one minute later. Air cooling reduced the reactor temperature to 120°C. A second aliquot of dicyclopentadiene (1.50 moles, 198.32 grams) was added fifteen minutes after the initial dicyclopentadiene addition. A maximum exotherm of 124°C resulted five minutes later. Air cooling reduced the reactor temperature to 120°C. Fifteen minutes later, a final aliquot of dicyclopentadiene (1.50 moles, 198.32 grams) was added and the 120°C reaction temperature was reachieved three minutes later. After thirty minutes, propylene glycol (1.80 moles, 136.98 grams) and 241.9 equivalent weight polypropoxylate of glycerin (1 mole) with propylene oxide [9 moles] (0.60 mole, 435.42 grams), and piperazine (0.30 mole, 25.84 grams) were added to the reactor and the steam condenser was started, nitrogen sparging was increased to 0.75 liter per minute, and the temperature controller was set at 160°C. This temperature was reached 31 minutes later. After 2.0 hours at 160°C, the temperature controller was set at 205°C and this temperature was achieved 30 minutes later. After 14.0 hours, a total of 107.5 milliliters of water and 18.5 milliliters of organic material were collected into the Dean Stark trap. The reactor was cooled to 165°C and

100 ppm of hydroquinone was added. The modified unsaturated polyesteramide was recovered as a transparent, light yellow-colored solid with a final acid number of 14.1.

Preparation 6: DICYCLOPENTADIENE MODIFIED UNSATURATED POLYESTERAMIDE WITH POLY(2-ETHYL-2-OXAZOLINE) MODIFICATION (Resin F)

Maleic anhydride (7.00 moles, 686.42 grams) was added to a reactor and heated to a 100°C stirred solution maintained under a nitrogen atmosphere. Water (7.10 moles, 127.94 grams) was added, inducing a maximum exotherm of 131°C two minutes later. Fifteen minutes after the water addition, the reactor was air cooled to 121°C and dicyclopentadiene (2.10 moles, 277.64 grams) was added. A maximum exotherm of 126°C resulted one minute later. Air cooling reduced the reactor temperature to 120°C. A second aliquot of dicyclopentadiene (2.10 moles, 277.64 grams) was added fifteen minutes after the initial addition. A maximum exotherm of 128°C resulted four minutes later and after an additional three minutes, air cooling reduced the reaction temperature to 120°C. Fifteen minutes later, a final aliquot of dicyclopentadiene (2.10 moles, 277.64 grams) was added and the 120°C reaction temperature was re-achieved three minutes later. After thirty minutes, propylene glycol (3.78 moles, 287.66 grams) and piperazine (0.420 moles, 36.81 grams) were added to the reactor and the steam condenser was started, nitrogen sparging was increased to 0.75 liter per minute, and the temperature controller was set at 160°C. The 160°C temperature was reached seventeen minutes later. After 2.0 hours at 160°C, the temperature controller was set at 205°C and this temperature was achieved twenty-four minutes

later. After 10.0 hours at the 205°C reaction temperature, the acid number was 21.5. Poly-(2-ethyl-2-oxazoline) (9.20 grams) of 500,000 average molecular weight was added to the reactor at this time. After a total of 14.0 hours at the 205°C reaction temperature, a total of 168.5 milliliters of water layer and 27 milliliters of organic material were collected into the Dean Stark trap. The reactor was cooled to 168°C and 100 ppm of hydroquinone was added. The modified polyesteramide was recovered as a transparent, yellow-colored solid with a final acid number of 16.8.

Preparation 7: DICYCLOPENTADIENE MODIFIED UNSATURATED POLYESTER (Control Resin G)

Maleic anhydride (686.42 grams, 7.00 moles) was added to a reactor and heated to a clear, stirred solution maintained at 100°C under a nitrogen atmosphere. Water (127.94 grams, 7.10 moles) was added inducing a maximum exotherm of 134°C two minutes later. The reactor was air-cooled to 121°C and fifteen minutes after the initial water addition, dicyclopentadiene (277.64 grams, 2.10 moles) was added. A maximum exotherm of 125°C resulted two minutes later and after an additional three minutes, air cooling reduced the reaction temperature to 120°C. Fifteen minutes after the initial dicyclopentadiene addition, a second aliquot of dicyclopentadiene (277.64 grams, 2.10 moles) was added. A maximum exotherm of 129°C resulted three minutes later and after an additional three minutes, air cooling reduced the reaction temperature to 120°C. A final aliquot of dicyclopentadiene (277.64 grams, 2.10 moles) was added fifteen minutes after the second dicyclopentadiene addition and the 120°C reaction temperature was re-achieved three minutes later.

Thirty minutes later, propylene glycol (319.62 grams, 4.20 moles) was added, nitrogen sparging was increased to 0.75 liter per minute, the steam condenser was started, and the temperature controller was set at 160°C. This temperature was achieved thirty-four minutes later. After two hours, the temperature controller was set at 205°C and this temperature was achieved twenty-nine minutes later. After fourteen hours, 156 milliliters of water layer and 18 milliliters of organic material were recovered into the Dean Stark trap. The reactor was cooled to 165°C and 100 ppm of hydroquinone was added. The modified polyester was recovered as a transparent, light-yellow colored solid with a final acid number of 19.6.

Preparation 8: DICYCLOPENTADIENE MODIFIED UNSATURATED POLYESTER WITH 11.9% BY WEIGHT OF FLEXIBILIZING GLYCOL ETHER COMPONENT (Control Resin H)

Maleic anhydride (6.00 moles, 588.36 grams) was added to a reactor and heated to a 100°C stirred solution maintained under a nitrogen atmosphere. Water (6.084 moles, 109.63 grams) was added, inducing a maximum exotherm of 131°C two minutes later. Fifteen minutes after the water addition, the reactor was air cooled to 120°C and dicyclopentadiene (1.80 moles, 237.98 grams) was added. A maximum exotherm of 124°C resulted one minute later. Air cooling reduced the reactor temperature to 120°C. A second aliquot of dicyclopentadiene (1.80 moles, 237.98 grams) was added fifteen minutes after the initial dicyclopentadiene addition. A maximum exotherm of 129°C resulted two minutes later. Air cooling reduced the reactor temperature to 120°C. Fifteen minutes later, a final

aliquot of dicyclopentadiene (1.80 moles, 237.98 grams) was added and the 120°C reaction temperature was re-achieved four minutes later. After thirty minutes, propylene glycol (2.79 moles, 212.32 grams) and 241.9 equivalent weight polypropoxylate of glycerin [1 mole] with propylene oxide [9 moles] (0.30 mole, 224.34 grams) were added to the reactor and the steam condenser was started, nitrogen sparging was increased to 0.75 liter per minute and the temperature controller was set at 160°C. The 160°C temperature was reached 38 minutes later. After 2.0 hours at 160°C, the temperature controller was set at 205°C and this temperature was achieved 25 minutes later. After 14.0 hours, a total of 122 milliliters of water layer and 24.5 milliliters of organic material were collected into the Dean Stark trap. The reactor was cooled to 168°C and 100 ppm of hydroquinone was added. The modified polyester was recovered as a transparent, light yellow-colored solid with a final acid number of 16.9.

Preparation 9: ORTHOPHTHALIC UNSATURATED POLYESTER (Control Resin I)

Maleic anhydride (411.85 grams, 4.20 moles) and phthalic anhydride (414.71 grams, 2.80 moles) were added to a reactor and heated to a white-colored stirred slurry maintained at 100°C under a nitrogen atmosphere. Propylene glycol (585.97 grams, 7.70 moles) was added and a maximum exotherm of 153°C resulted seventeen minutes later. At that time, nitrogen sparging was increased to 0.75 liter per minute, the steam condenser was started, and the temperature controller was set at 160°C. That temperature was achieved five minutes later. After two hours at the 160°C reaction temperature, the temperature controller was set at

205°C and that temperature was achieved fifty-eight minutes later. After 10.0 hours at the 205°C reaction temperature, a total of 128 milliliters of water layer was recovered into the Dean Stark trap. The reactor was cooled to 160°C and 100 ppm of hydroquinone was added. The unsaturated polyester was recovered as a clear, transparent solid with a final acid number of 26.4.

Preparation 10: VINYL ESTER RESIN (Control Resin J) (Based on epoxy novolac and epoxy bisphenol A)

About 1 equivalent of methacrylic acid is reacted with 0.75 equivalent of an epoxy novolac having an epoxide equivalent weight (EEW) of 175-182 and 0.25 equivalent of a glycidyl polyether of bisphenol A having an EEW of 186-192. The above reactants are heated to 115°C with catalyst and hydroquinone present until the carboxylic acid content reaches about 1 percent. The reactants are cooled and then styrene (containing 50 ppm of t-butyl catechol) is added. The final resin diluted with styrene has a pH of 7.7 and contains approximately:

| Contents | % |
|---|---|
| styrene | 36 |
| methacrylic acid | 20.6 |
| epoxy novolac | 32.1 |
| diglycidyl ether of bisphenol A | 11.3 |
| | 100.00 |

Preparation 11: VINYL ESTER RESIN (Control Resin K) (based on epoxy bisphenol A)

Bisphenol A is catalytically reacted with a glycidyl polyether of bisphenol A having an EEW of 186-192 (polyether A) at 150°C under a nitrogen atmosphere for 1 hour to form a polyepoxide having an EEW of 535. After cooling to 110°C, additional diglycidyl ether of bisphenol A (EEW = 186-192) is added with methacrylic acid and hydroquinone and reacted to a carboxyl content of about 2-2.5 percent. Then maleic anhydride is added to and reacted with the vinyl ester resin. The final resin, diluted with styrene, has a pH of 7.7 and contains approximately:

| Contents | % |
|---|---|
| bisphenol A | 7.7 |
| diglycidyl ether of bisphenol A | 36.7 |
| methacrylic acid | 9.15 |
| maleic anhydride | 1.45 |
| styrene | 45 |
| | 100.00 |

Preparation 12: RUBBER MODIFIED VINYL ESTER RESIN (Control Resin L)

A commercial grade of a rubber modified, styrenated vinyl ester resin was obtained. This resin is commercially available under the designation Derakane® 8084.05 (Dow Chemical Co.).

Preparation 13: VINYL TERMINATED URETHANE OLIGOMER

A vinyl terminated urethane oligomer was prepared in the manner set forth in U.S. Application Serial Number 502,869 filed June 9, 1983. The vinyl terminated urethane oligomer was prepared in two steps; the polypropylene glycol (2000 average molecular weight) was reacted with toluene diisocyanate, in the presence of stannous octoate, until the -OH band in the infrared (IR) spectrum of the reaction mixture disappeared and the 2-hydroxypropylacrylate was added to react out the remaining isocyanate groups.

Preparation 14 DICYCLOPENTADIENE MODIFIED UNSATURATED POLYESTERAMIDE RESIN MODIFIED WITH RUBBER 16% BY WEIGHT (Resin M)

Maleic anhydride (686.42 grams, 7.00 moles) was added to a reactor and heated to a clear, stirred solution maintained at 100°C under a nitrogen atmosphere. Water (127.94 grams, 7.10 moles) was added inducing a maximum exotherm of 134°C two minutes later. The reactor was aircooled to 121°C and fifteen minutes after the initial water addition, dicyclopentadiene (277.64 grams, 2.10 moles) was added. A maximum exotherm of 126°C resulted one minute later, and after an additional two minutes, air cooling reduced the reaction temperature to 120°C. Fifteen minutes after the initial dicyclopentadiene concentrate addition, a second aliquot of dicyclopentadiene (277.64 grams, 2.10 moles) was added. A maximum exotherm of 126°C resulted four minutes later and after an additional three minutes, air cooling reduced the reaction temperature to 120°C. A final aliquot of dicyclopentadiene (277.64 grams, 2.10 moles) was added fifteen minutes after the second dicyclopentadiene addition and the 120°C reaction

temperature was re-achieved three minutes later. Thirty minutes later, propylene glycol (287.66 grams, 3.78 moles) and piperazine (36.18 grams, 0.420 moles) were added and nitrogen sparging was increased to 0.75 liter per minute, the steam condensor was started, and the temperature controller was set at 160°C. This temperature was achieved twenty minutes later.

After two hours, the temperature controller was set at 205°C and this temperature was achieved twenty-nine minutes later. After thirteen hours at the 205°C reaction temperature, a carboxyl- terminated rubber (349.72 grams) was added to the reactor. The carboxyl-terminated rubber used is commercially available from B. F. Goodrich and is a copolymer of acrylonitrile and butadiene with a 21.5 percent acrylonitrile content, 3.0 percent carboxyl groups located both terminally and pendantly and having a 3500 average molecular weight (HYCAR® 1300X18CTBNX). After a total of 14.0 hours at the 205°C reaction temperature, a total of 155 milliliters of water layer and 26 milliliters of organic material were collected into the Dean Stark trap. The reactor was cooled to 165°C and 100 ppm of hydroquinone was added. The rubber modified unsaturated polyesteramide was recovered as a transparent, light yellow-colored solid with a final acid number of 20.2.

Preparation 15 DICYCLOPENTADIENE MODIFIED UNSATURATED POLYESTERAMIDE RESIN MODIFIED WITH RUBBER 12% BY WEIGHT (Resin N)

A rubber modified dicyclopentadiene modified unsaturated polyesteramide was prepared using the method of preparation 14, except that the amount of carboxyl-terminated rubber used was decreased to 251.17 grams.

Preparation 16: BLEND OF RESINS A AND K (RESIN O)

Resin A from preparation 1 was blended with Resin K from Preparation 11 and styrene to provide a resin solution containing 47 parts by weight of dicyclopentadiene modified unsaturated polyesteramide, 8 parts by weight of vinyl ester resin, and 45 parts by weight of styrene.

Example 1

Compressive strength test pieces were prepared using a modification of standard method ASTM C882 wherein each polymer concrete formulation was poured onto a concrete cylinder with a 30 degree angle face. Each concrete cylinder was contained in a plastic cylindrical mold. A portion (171 grams) of Resins B, D and E, respectively, were blended with styrene (129 grams) to provide 43 percent by weight (pbw) styrenated solutions. Resin A solution was used with a 40% styrene content. A portion (277 grams) of each respective resin solution was catalyzed using 0.30 pbw dimethylaniline and 1.00 pbw benzoyl peroxide. Then 1108 grams of a 50/50 volume percent mixture of No. 3 and No. 4 blasting sand was stirred into each solution. The resulting polymer concretes were split into two equivalent aliquots which were used to prepare duplicate compressive strength test pieces. A tamping rod and vibrator were used to pack the cylinderical molds with the polymer concrete and to assist in the removal of bubbles from the polymer concrete before gelation. After post curing for three days at room temperature (25°C), the 7.62 cm diameter by 15.24 cm cylindrical compressive strength test pieces were demolded and tested by loading along their longitudinal axes at a loading rate of 1260 kg/cm² per minute until failure occurred. The

ultimate load was divided by the cross-sectional area to determine the compressive strength of each sample. The average of the duplicate compressive strength values are given in Table I and designated as dry.

Example 2

The method of Example 1 was repeated except that each concrete cylinder contained in a plastic cylindrical mold was immersed under water for three hours. The water was then poured off each cylinder five minutes prior to adding the respective polymer concrete. The average of the duplicate compressive strength values is given in Table I and designated as wet.

TABLE I

| Designation of Resins Used | Compressive Strength ($kg/cm^2$) Example 1 (dry) | Example 2 (wet) |
|---|---|---|
| A (Prep. 1) | 307 | 150 |
| B (Prep. 2) | 348 | 160 |
| D (Prep. 4) | 295 | 191 |
| E (Prep. 5) | 340 | 165 |

Control 1

The methods of Examples 1 and 2 were repeated using polymer concretes prepared from Control Resins G, H, I and L. The average of the compressive strength values is given in Table II and designated as dry or wet, respectively.

TABLE II

| Designation of Control Resins Used | Compressive Strength ($kg/cm^2$) (Dry) | (Wet) |
|---|---|---|
| G (Prep. 7) | 213 | 151 |
| H (Prep. 8) | 236 | 156 |
| I (Prep. 9) | 273 | 114 |
| L (Prep. 12) | 308 | 56 |

When Tables I and II are compared, it is seen that the dry compressive strength values for polymer concretes of Resin A (or Resin B) versus Control Resin G and for Resin D versus Control Resin H are significantly higher. Polymer concrete Control Resin L exhibits the lowest wet compressive strength of the series.

Control 2

The methods of Examples 1 and 2 were repeated except that the polymer concrete was prepared using a methyl methacrylate control, specifically prepared as follows:

A mixture of monomer grade methyl methacrylate (285 grams) and trimethylolpropane trimethacrylate (15 grams) was catalyzed using 0.60 pbw dimethyltoluidine and 1.20 pbw benzoyl peroxide. Then 1164 grams of a 50/50 volume percent mixture of No. 3 and No. 4 blasting sand containing poly(methylmethacrylate) powder (36 grams) was stirred into the solution. The average of the compressive strength values is given in Table III and designated as dry or wet, respectively.

TABLE III

| Designation of Control Resins Used | Compressive Strength ($kg/cm^2$) (Dry) | (Wet) |
|---|---|---|
| Methyl methacrylate | 230 | 108 |

When Tables I and III are compared, it is seen that the dry compressive strength values for polymer concretes of Resins A, B and D were significantly higher than that obtained for the methyl methacrylate control. The wet compressive strength values for polymer concretes of Resins A, B, D and E were also higher than the value obtained for the methyl methacrylate control.

Example 3

The method of Example 1 was repeated using the polymer concrete prepared from Resins A, D, Control Resin I and the methyl methacrylate control except that each concrete cylinder contained in a plastic cylinderical mold was immersed under water for twenty-four hours. The water was not poured off prior to the use of each concrete cylinder, rather the polymer concretes were poured into the cylindrical molds through the water. The average of the duplicate compressive strength values is given in Table IV and designated as wet. Dry compressive strength values obtained in Example 1 and Control 2 are shown for purposes of comparison.

TABLE IV

| Designation of Resin Used | Compressive Strength ($kg/cm^2$) (dry) | (wet) |
|---|---|---|
| A (Prep. 1) | 307 | 136 |
| D (Prep. 4) | 295 | 68 |
| Control Resin | | |
| I (Prep. 9) | 273 | 19 |
| Methyl methacrylate control | 230 | none* |

* The methyl methacrylate polymer concrete cures without bonding to the concrete.

The polymer concrete of the methyl methacrylate control did not bond to concrete under water whereas the polymer concretes of Resins A and D provide substantial wet compressive bond strength.

Example 4

Tensile strength test pieces having a dog bone configuration and measuring 7.62 cm in length, 2.54 cm thick, 4.13 cm at tab ends and 2.54 cm at center were prepared using standard methods (ASTM C 307). A portion (85.5 grams) of Resins E and F, respectively, were blended with styrene (64.5 grams) to provide 43 pbw styrenated solutions. Resins A, O, and C were used with the previously specified styrene content. A portion (100 grams) of each respective resin solution was catalyzed using 0.30 pbw dimethylaniline and 1.00 pbw benzoyl peroxide, then 400 grams of a 50/50 volume percent mixture of No. 3 and No. 4 blasting sand was stirred into each solution. The resulting polymer concretes were split to two equivalent

aliquots which were used to prepare duplicate tensile strength test pieces. A tamping rod was used to pack brass two-piece molds which had been coated with a wax release agent. After post curing for three days at room temperature (25°C), the test pieces were demolded and tested on an Instron machine at a crosshead speed of 0.51 cm per minute until failure occurred. The average of the duplicate tensile strength values is given in Table V.

TABLE V

| Designation of Resin Used | Tensile Strength ($kg/cm^2$) |
|---|---|
| A (prep. 1) | 85 |
| C (prep. 3) | 106 |
| E (prep. 5) | 124 |
| F (prep. 6) | 96 |
| O (prep. 16) | 103 |

Control 3

The method of Example 4 was repeated using polymer concretes prepared from Control Resins J and L. The average of the tensile strength values is given in Table VI.

TABLE VI

| Designation of Resin Used | Tensile Strength ($kg/cm^2$) |
|---|---|
| J (prep. 10) | 111 |
| L (prep. 12) | 148 |

Example 5

Tensile strength test pieces were prepared using standard methods (ASTM C 307). A portion (85.5

grams) of Resin E was blended with styrene (64.5 grams) to provide a 43 pbw styrenated solution. Resins A, O, and C were used with the previously specified styrene content. A portion (100 grams) of each respective resin solution was catalyzed using 0.30 pbw dimethylaniline and 1.00 pbw benzoyl peroxide. Then 400 grams of a sand mixture having 50% by volume of 430 sand, 25% by volume of Clemtex 5, and 25% by volume of 207 sand was stirred into each solution. (430 and 207 are high silica sands sold by Destone Inc., Chardon, Ohio. Clemtex 5 is a high silica sand sold by Clemtex Inc., Houston, Texas) The resulting polymer concretes were split to two equivalent aliquots which were used to prepare duplicate tensile strength test pieces using the method of Example 4. The average of the duplicate tensile strength values is given in Table VII.

TABLE VII

| Designation of Resin Used | Tensile Strength ($kg/cm^2$) |
|---|---|
| A (prep. 1) | 124 |
| C (prep. 3) | 127 |
| E (prep. 5) | 140 |
| O (prep. 16) | 126 |

Control 4

The method of Example 5 was repeated using polymer concretes prepared from Control Resins J and L. The average of the tensile strength values is given in Table VIII.

TABLE VIII

| Designation of Resin Used | Tensile Strength ($kg/cm^2$) |
|---|---|
| J (prep. 10) | 135 |
| L (prep. 12) | 170 |

Example 6

Tensile strength test pieces were prepared using standard methods (ASTM C 307). Portions of Resin A were used with the previously specified styrene content and formulated so as to contain 2.0, 4.0 and 9.0 pbw of the vinyl terminated urethane oligomer (VTUO) from preparation 13. A portion (100 grams) of each respective resin and vinyl oligomer solution was catalyzed using 0.30 pbw dimethylaniline and 1.00 pbw benzoyl peroxide then 400 grams of a 50/50 volume percent mixture of No. 3 and No. 4 blasting sand was stirred into the solution. The resulting polymer concretes were split to two equivalent aliquots which were used to prepare duplicate tensile strength test pieces using the method of Example 4. The average of the duplicate tensile strength values is given in Table IX.

TABLE IX

| Designation of Resin Used | Tensile Strength ($kg/cm^2$) |
|---|---|
| A (Prep. 1) | 85 |
| A + 2.0 pbw VTUO | 101 |
| A + 4.0 pbw VTUO | 119 |
| A + 9.0 pbw VTUO | 113 |

Tensile strength values for polymer concrete of Resin A significantly increases when 2.0 pbw or more of vinyl reactive plasticizer are used.

Example 7

The method of Example 6 was repeated using resin solutions prepared from Resin C and 4.0, 7.5 and 9.0 pbw of VTUO respectively. The average of the duplicate tensile strength values is given in Table X.

TABLE X

| Designation of Resin Used | Tensile Strength ($kg/cm^2$) |
|---|---|
| C (Prep. 3) | 106 |
| C + 4.0 pbw VTUO | 101 |
| C + 7.5 pbw VTUO | 108 |
| C + 9.0 pbw VTUO | 111 |

Tensile strength values for polymer concrete of Resin C significantly increase when 7.5 pbw or more of vinyl reactive plasticizer are used.

Example 8

The method of Example 6 was repeated using resin solutions prepared from Resin C and 7.5 or 9.0 pbw of VTUO, respectively. The aggregate system of Example 5 was used in place of the No. 3 and No. 4 blasting sand mixture used in Example 6. The average of the duplicate tensile strength values is given in Table XI.

TABLE XI

| Designation of Resin Used | Tensile Strength ($kg/cm^2$) |
|---|---|
| C (Prep. 3) | 127 |
| C + 7.5 pbw VTUO | 128 |
| C + 9.0 pbw VTUO | 139 |

Example 9

Pairs of 7.62 cm diameter by 15.24 cm cylindrical compressive strength test pieces were prepared from Resin A and the methyl methacrylate control using the method of Example 1 with the following modifications:

The plastic cylindrical molds were filled with water only. Each polymer concrete was poured into the cylindrical mold through the water. The resulting test pieces were composed solely of the respective polymer concrete used. The average of the duplicate compressive strength values is given in Table XII.

TABLE XII

| Designation of Resin Used | Compressive Strength ($cm/kg^2$) |
|---|---|
| A (Prep. 1) | 272 |
| Methyl methacrylate control | 153 |

The compressive strength of the polymer concrete of Resin A cured under water is significantly higher than that obtained for the methyl methacrylate control.

Example 10

The tensile strength of polymer concretes prepared using each of the rubber modified dicyclopentadiene modified unsaturated polyesteramides of Preparations 14 and 15 were determined using the method of Example 4. The results are given in Table XIII.

TABLE XIII

| Designation of Resin Used | Tensile Strength ($cm/kg^2$) |
|---|---|
| M (Prep. 14) | 111 |
| N (Prep. 15) | 102 |

By comparison with resin A in Table V it is seen that the rubber modification substantially increases the tensile strength.

Example 11

Polymer concrete was prepared using an aggregate consisting of 50 pbw all-purpose sand and 50 pbw crushed limestone which passed a 0.95 cm sieve but was retained by a number 4 sieve. The resin content was 13 pbw based on the aggregate. The resin was catalyzed using 0.6 pbw dimethylaniline and 2.0 pbw benzoyl peroxide. The resin used was prepared using the method of Preparation I. The polymer concrete was used to apply an overlay 2.54 cm thick to a series of 12.7 x 12.7 x 2.54 cm portland cement concrete specimens which were fully cured. The portland cement concrete specimens varied with respect to surface, as follows: smooth (troweled) dry, smooth wet, rough (textured) dry, and rough wet.

Wet surfaces were prepared by soaking the entire portland cement concrete test piece for 24 hours under water prior to application of the polymer concrete. The cured specimens of polymer concrete bonded to portland cement concrete were tested for shear stress required to separate the polymer concrete overlay from the portland cement concrete by application of force parallel to the contact surface. The results are given in Table XIV and designated as dry or wet and smooth or rough.

TABLE XIV

| Sample Designation | Shear Stress ($kg/cm^2$) |
|---|---|
| Rough/Dry | 36 |
| Rough/Wet | 33 |
| Smooth/Dry | 33 |
| Smooth/Wet | 18 |

- Claims -

1. A curable polymer concrete composition comprising:

(A) from 2 to 20 percent by weight of a polymeric composition comprising
   (1) from 20 to 80 percent by weight of norbornyl modified unsaturated polyesteramide,
   (2) from 20 to 80 percent by weight of one or more ethylenically unsaturated monomers,
   (3) from 0 to 60 percent by weight of a vinyl reactive additive, and

(B) from 98 to 80 percent by weight of an aggregate.

2. The composition of Claim 1 wherein said aggregate comprises sand, gravel silica flour, fly ash, or mixtures thereof.

3. The composition of Claim 1 wherein said polyesteramide contains from 1 to 50 percent by weight of a copolymerized polyether polyol having a functionality of three or more.

4. The composition of Claim 3 wherein said polyol is derived from an ethoxylated and/or propoxylated tri, tetra, penta or hexa hydroxy compound.

5. The composition of Claim 1 wherein said polyesteramide contains from 0.01 to 2.0 percent by weight of a copolymerized poly(2-alkyl-2-oxazoline).

6. The composition of Claim 1 wherein said polyesteramide contains from 0.5 to 20 percent by weight of a copolymerized carboxylated rubber.

7. The composition of any one of the preceding claims wherein said vinyl reactive additive is selected from vinyl ester resins or vinyl terminated urethane oligomers.

8. The composition of Claim 7 wherein said vinyl reactive additive is from 1 to 60 percent by weight of a vinyl ester resin or mixture of vinyl ester resins.

9. The composition of Claim 7 wherein said vinyl reactive additive is from 1 to 15 percent by weight of vinyl terminated urethane oligomers.

10. The composition of any one of the preceding claims wherein the norbornyl component of the norbornyl modified unsaturated polyesteramide is derived from dicyclopentadiene or a dicyclopentadiene concentrate.

11. The composition of any one of the preceding claims wherein said ethylenically unsaturated monomer component of the composition is styrene.

12. The composition of any one of the preceding claims wherein said concrete composition additionally contains up to 50 percent by weight of metal fines, glass fibers, synthetic fibers, glass mats, metal turnings, metal fibers, hydrated alumina, ceramic beads and mixtures thereof.

13. The cured composition as set forth in any one of the preceding claims.